# EUROPEAN PATENT SPECIFICATION

(11) **EP 3 795 404 B1**
(45) Date of publication and mention of the grant of the patent: **16.02.2022**
(21) Application number: 19763029.6
(22) Date of filing: 16.05.2019
(51) Int. Cl.: B60K 25/08

(54) **EQUIPMENT FOR GENERATING ELECTRICAL ENERGY FOR VEHICLES WITH A COOLING UNIT**
VORRICHTUNG ZUR STROMVERSORGUNG VON FAHRZEUGEN MIT EINEM KÜHLAGGREGAT
ÉQUIPEMENT DE GÉNÉRATION D'ÉNERGIE ÉLECTRIQUE POUR VÉHICULES DOTÉS D'UNE UNITÉ DE FROID

(30) Priority: 16.05.2018 ES 201830468
(43) Date of publication of application: 24.03.2021
(73) Proprietor: Indianola Inversiones, S.L., 28006 Madrid Madrid (ES)
(72) Inventor: LÓPEZ BENAVENT, Fernando, 46181 Benisanó (Valencia) (ES); NAVARRO PERIS, Ricardo, 46220 Picasent (Valencia) (ES); MORALES MONTESINOS, Lorenzo, 46022 Valencia (ES); GADEA CERDERA, Mariano, 46022 Valencia (ES)
(74) Representative: Pons
(86) International application number: PCT/ES2019/070324
(87) International publication number: WO 2019/219997

(56) References cited:
- CN-A- 101 219 643
- US-A1- 2009 256 450
- US-A1- 2010 154 449
- US-A1- 2014 358 343
- US-B1- 8 723 344

## Description

### OBJECT OF THE INVENTION

The present invention falls within the technical field of electric generators. More specifically, a set of equipment for generating electrical energy for vehicles is described. It allows for electrical energy to be obtained in order to power a cooling unit of the vehicle starting from the rotational movement of the tyres of said vehicle.

### BACKGROUND OF THE INVENTION

Currently, it is very common to use vehicles which include cooling units for transporting goods that have to be refrigerated. Generally, these types of cooling units are powered by means of electrical energy obtained with diesel engines. The most important technical problem associated with the use of diesel engines for this purpose is that they consume a lot and pollute heavily.

Some alternative solutions for obtaining electrical energy intended to be used in said cooling units are known from the prior art. Some of the solutions obtain said energy by taking advantage of the movement of the very vehicle.

In this regard, devices for generating electrical energy are known, for example, comprising at least one wheel which moves on the ground when the vehicle is moved and which is connected to an electrical energy generator in order to obtain said electricity, such as for example in document CN103434396. In this device, the movement of the wheel to the ground is performed by means of a hydraulic piston and the movement of the wheel is transmitted to an engine by means of a gear system.

Document CN201009746 is also known which allows electricity to be generated by means of a dynamo installed in the shaft of the vehicle and that is connected to a system of gears which links it to a wheel of the vehicle.

However, these described solutions still do not solve an essential technical problem, which is that of maintaining the electrical energy in the cooling unit in the periods when the vehicle is stopped, especially when it is stopped for a long time. As previously described, the known devices allow energy to be obtained during the periods of movement of the vehicle, however, no solutions are proposed which enable correct powering with electrical energy to be obtained when the vehicle is stopped.

This is a significant disadvantage when the vehicle is not rolling, but it is necessary to maintain the temperature in the cooling unit. For example, in cases wherein the vehicle circulates on a road which is closed and the vehicle is trapped without access to alternative energy sources. In these cases, since the vehicle is stationary, the electrical energy necessary to keep the cooling unit in operation is not generated and the merchandise being transported can spoil.

Document US8723344B1 describes a mobile energy harvesting system which can store energy when is not in motion for later use in powering a mobile transport refrigeration unit or truck mounted refrigeration units, eliminating unnecessary use of diesel motors on the refrigeration unit.

Document US2010/154449A1 describes a regenerative electric drive refrigerated unit for a conveyance vessel, thereby providing temperature cooling in a compartment of the conveyance vessel. An electricity generator power a compressor unit in the refrigeration unit. The electricity generator is powered by a drive mechanism obtaining its energy from the motion of the conveyance vessel such that when the invention is employed, a diesel engine that normally powers the compressor unit in the refrigeration unit is disabled and stops running, thereby saving anergy and reducing air pollution otherwise generated by the burning of fossil fuels when the diesel engine is running.

Document US2014/358343A1 describes a tire friction drive rotational power and energy source which provides means of harvesting energy from a rotating tire of a vehicle in motion within minimal energy impact on vehicle power source. Rotational inertia or energy is transferred from one or more tires through friction to turn an energy producing device, such as an alternator. The alternator tyre makes contact with one or more vehicle tires for energy transfer, rotating via a shaft connected to the alternator pulley, thereby harvesting energy while the vehicle is in motion.

### DESCRIPTION OF THE INVENTION

The present invention proposes a set of equipment for generating electrical energy for vehicles with a cooling unit which enables the problems of the previously described state of the art to be solved.

The equipment is intended for use in vehicles equipped with a chassis and tyres, and comprises at least one generator assembly, comprising an axle, a wheel arranged on one of the ends of the axle, and a reducer positioned between both of them, the wheel being intended to make contact with the upper portion of one of the tyres of the vehicle, such that when the vehicle moves it causes a rotational movement of the wheel, and therefore of the axle; and an electric generator, connected to the axle, which transforms the rotational energy of the axle into electricity.

The equipment generates electrical energy both when the vehicle circulates in long routes by freeway or motorway (70, 80 and 90 km/h), and when it circulates through interurban and urban areas (60, 50, 40 or even 30 km/h ).

The generator assembly further comprises a drive mechanism, configured to move the wheel between a resting position wherein it is separated from the tyre, and a working position wherein it is in contact with the tyre, such that it is kept in the working position until the electric generator is at 100% charge and the wheel moves back to the resting position. This drive mechanism comprises:
- a support intended to be linked to the chassis of the vehicle,
- a movable plate attached to the support,
- a cover which supports the electric generator and is in contact with the movable plate,
- a drive element, attached to the movable plate, so as to move the movable plate with respect to the support, integrally with the cover and the wheel, from the resting position to the working position,
- a solenoid valve which enables the passage or exit of pressurised air to the drive element.

The drive mechanism can additionally comprise a vibration-absorbing disk, positioned between the movable plate and the cover, for absorbing vibrations.

The energy generated by the rotation of the axle is stored in at least one solid battery (preferably lithium or graphene but which could be made of any material that is known or that will be developed in the future and which enables the performance of the batteries to be improved) attached to the electric generator. In this manner, when there is an excess of energy produced it is not lost or discarded, but rather it is stored in case it has to be used later, for example, if the vehicle is stopped but the cooling unit must be kept running.

The invention also comprises a charger attached to the electric generator and to the battery in order to transform the alternating current generated in the electric generator into a direct current that is stored in the battery.

Part of the invention is a control unit connected at least to the electric generator, the battery and the solenoid valve, configured to receive a plurality of signals, with which it manages the operations of the elements of the equipment.

The invention may further comprise a detector for the speed of the vehicle connected to the control unit. With this signal, determined by the speed of the vehicle, depending on whether the speed is sufficient or not, the drive mechanism is activated to put the wheel in contact with the tyre, in order to obtain energy.

Additionally, the equipment may comprise devices for measuring the electrical flow, electrical power, frequency, temperature and pneumatic flow, all connected to the control unit.

The control unit also manages the energy needs of the cooling unit and can also be connected to the lighting system of the semi-trailer. Likewise, it is responsible for distributing the stored energy or the energy that is being generated. With this control unit the equipment of the invention has a large capacity to expand with more control and communication peripherals that can assist in a more efficient management of the stored energy or of the energy that is being generated.

In an exemplary embodiment, the control unit can take into account routes, stops, travel times and speed in order to generate automatic behaviours of the equipment.

The remote control and telecommunication capacity of all the management and operations of the control of the device via remote through GPS or data signal is also contemplated.

Thus, with the equipment of the present invention energy is generated to power the cooling unit of the vehicle by means of friction and rotation by means of powering electric motors tasked, in this case, with generating the necessary cold.

In one embodiment of the invention, in order to achieve greater energy generation, the equipment comprises at least two generator assemblies and a synchronoscope connected to the control unit, the battery and the electric generators of the generator assemblies, in order to unify the currents generated by the electric generators and transfer them to the battery.

It is possible to place, for example, 6 generator assemblies, each one with a turn ratio suitable for a speed range.

Preferably, the equipment is used to start electric motors installed in the vehicle, which in turn are responsible for carrying out the refrigeration and storage of goods such as food. In one embodiment, the equipment is used in the towing of refrigerated lorries, independently from the tractive unit. As previously described, the equipment can also be used to power, with the energy generated, the electrical components required in the semi-trailer of the vehicle, such as those of the lighting system.

The energy used for this cooling purpose is produced with the equipment of the present invention in a totally ecological, noise-free manner. It also enables substituting, for example, current agricultural diesel engines that are currently widely used and that pollute heavily due to the fuel they use and the noise they emit when they are running.

Another advantage of the equipment of the invention is that it can be oriented in different angles in order to adapt perfectly to the different types of axles of each existing vehicle. Thus, it is a universal set of equipment which adapts to any model of refrigerating lorry or trailer. Also, the drive mechanism can be controlled electrically and/or pneumatically depending on the needs of each application.

In addition, the equipment is positioned on the internal portion of the chassis, in contact with the driven wheels, away from sensitive points such as brakes, suspensions, etc. and therefore does not compromise the factory specifications of the vehicle. The equipment is not in contact with critical areas such as tyre rims of the vehicle or the shaft thereof, which is where the brakes are and therefore has a higher temperature. In this manner, possible risks of equipment fire or malfunction of the equipment are avoided.

The proposed equipment can also be used in reefer containers which are those used in all ports worldwide to transport goods in cold (at a low temperature). The equipment can be connected in this type of containers by means of contact of the wheel with the tyres of the trailers that are used to move them, in order to keep the cooling unit of these containers active without consuming diesel and in a silent and ecological manner with extremely prolonged autonomy.

Until now, reefer containers are directly connected to external power lines when they are in port or on the ship wherein they are transported. In this manner, the present invention would provide a solution to the energy requirement of the cooling unit during the transportation thereof. In this manner, the weight of the containers is also reduced, since the diesel generator that is usually coupled to this generation of additional energy can be eliminated.

Also part of the invention is a set of equipment which additionally comprises a gasoline combustion engine. In one example, the equipment comprises a mechanical system combining electrical and combustion elements for generating kinetic energy which moves a mechanical compressor of the vehicle's cooling unit and generates electrical energy to power the rest of the electrical components. In this case, the equipment includes a type of transmission of a planetary transaxle wherein both motors, electric and combustion, act to give traction to the compressor.

The invention also envisages the possible connection of the equipment to any external energy source. To do so, it comprises a three-phase connection, which is preferably arranged on the rear portion of the trailer of the vehicle so that it can connect to any conventional 380-400V three-phase electrical grid so that it can be used both to provide energy for the cooling unit, and to charge the batteries.

In another embodiment, the device also comprises a combustion engine. In this manner the equipment has greater autonomy for when the vehicle has been stopped for a long time and the solid graphene battery is discharged. It is a small combustion engine, with low fuel consumption and operation management combined with the battery.

Finally it should be noted that in an indirect manner, the invention considerably improves the distribution of the weight of the semi-trailer of the vehicle wherein it is installed since it evenly distributes the weight in the underside of said vehicle instead of increasing it only on one end thereof like before with the diesel engines which would provide power. Furthermore, it provides extra rigidity to the chassis of the vehicle since the batteries are installed in said chassis.

### DESCRIPTION OF THE DRAWINGS

To complement the description that is being made and for the purpose of helping to better understand the features of the invention according to a preferred practical embodiment thereof, in which a set of drawings depicting the following in an illustrative and non-limiting manner is attached as an integral part of said description:
Figure 1.- Shows an exploded view of the generator assembly.
Figure 2.- Shows a side view of a vehicle with a cooling unit wherein the equipment is observed, installed in the chassis of the vehicle.
Figure 3.- Shows a rear view of a vehicle with a cooling unit and a zoom can be seen of the area of the chassis of the vehicle wherein the equipment is positioned.
Figures 4a-b.- Show a first embodiment of the drive mechanism.
Figure 4c.- Shows the vibration-absorbing disk positioned in the drive mechanism of the first embodiment.
Figure 5.- Shows a second embodiment of the drive mechanism.
Figure 6.- Shows a schematic view of the control unit connected to the battery, the electric generator, the solenoid valve and the speed detector.
Figure 7.- shows a schematic view of the control unit connected to the different elements when the equipment comprises a synchronoscope.

### PREFERRED EMBODIMENT OF THE INVENTION

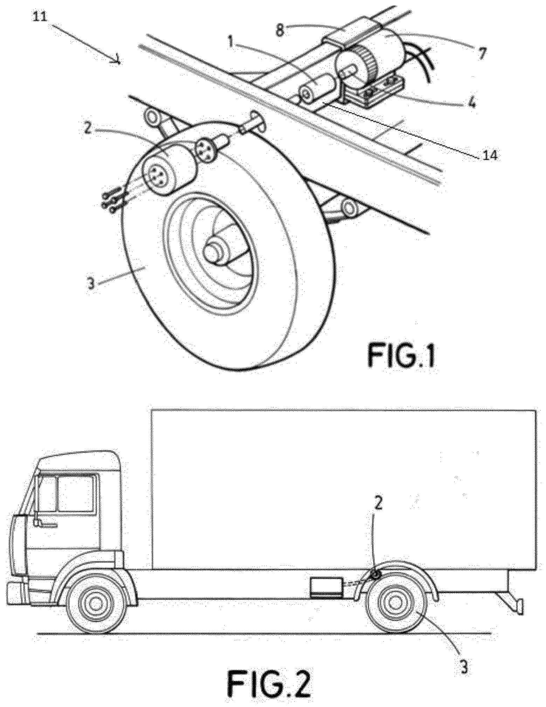

Below, an exemplary embodiment of the present invention is described with the aid of figures 1 to 7.

The present invention describes a set of electrical energy equipment for vehicles having a cooling unit. The described equipment is positioned on the internal portion of the chassis (14), in contact with a tyre (3), as seen for example in figure 1, and is intended to be connected to a cooling unit of a vehicle.

The equipment comprises at least one generator assembly (11), comprising an axle (1), a wheel (2) arranged on one of the ends of the axle (1), and a reducer (19), which is positioned between both of them, said wheel (2) being intended to make contact with the upper portion of one of the tyres (3) of the vehicle such that when the vehicle moves it causes a rotational movement of the wheel (2) and therefore of the axle (1).

Figure 2 shows a side view of a vehicle with a cooling unit wherein a set of equipment like the one described has been installed. In said figure it can be seen how the wheel (2) of the equipment stays in contact with one of the tyres (3) of the vehicle when it is in the working position, meaning, when it is generating energy.

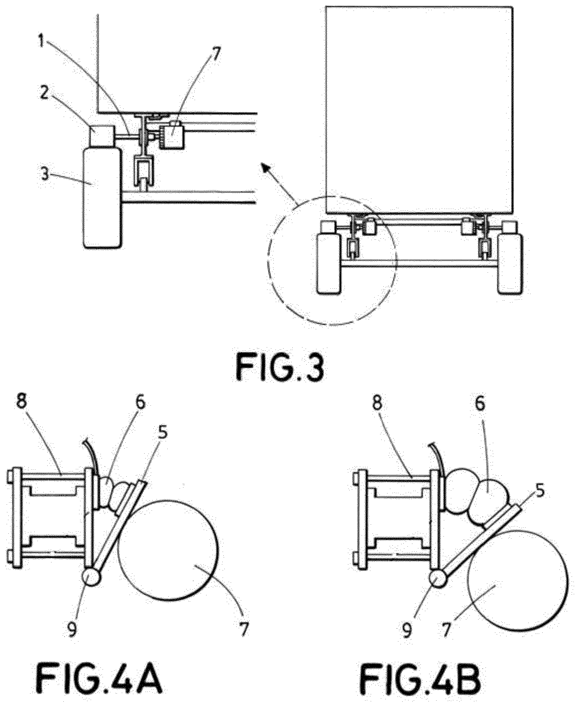

In figure 3 you can see the equipment installed in a vehicle with a cooling unit from a different view. In this case it shows a rear view of the vehicle and the area of the chassis (14) wherein the equipment is installed can be seen.

The equipment also comprises an electric generator (4) connected to the axle (1) which transforms the rotational energy of said axle (1) into electricity.

In order to move the wheel (2) between a resting position wherein it is separated from the tyre (3) and a working position wherein it is in contact with the tyre (3), the equipment comprises a drive mechanism.

In a first embodiment of the invention, said drive mechanism comprises;
- a support (8) intended to be linked to the chassis (14) of the vehicle,
- an articulation shaft (9) attached to the support (8),
- a movable plate (5) tilting with respect to the articulation shaft (9),
- a cover (7) which supports the electric generator (4) and is in contact with the movable plate (5),
- a drive element comprising a pneumatic mattress (6) attached to the movable plate (5) and to the support (8), such that when inflated it causes the movable plate (5) to tilt with respect to the articulation shaft (9) in order to move the cover (7) integrally with the electric generator (4) and the wheel (2), from the resting position to the working position,
- a solenoid valve (16) which enables the passage of pressurised air to the pneumatic mattress (6) or the outlet of air from the inside of the pneumatic mattress (6) for the inflating or deflating thereof;

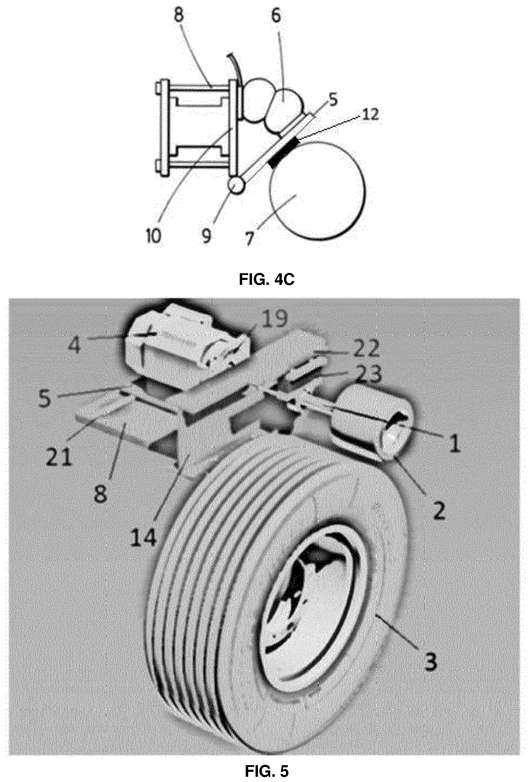

In this first embodiment, the drive mechanism comprises, as shown in figure 4c, a vibration-absorbing disk (12) positioned between the movable plate (5) and the cover (7).

In a second embodiment of the invention, which is shown in figure 5, the drive mechanism comprises:
- a support (8) intended to be linked to the chassis of the vehicle (14),
- guides (21) located on the support (8), parallel to the chassis (14),
- a movable plate (5) positioned on the guides (21),
- a cover (7) which supports the electric generator (4) and is in contact with the movable plate (5),
- a guide platform (22), intended to be fastened to the chassis (14),
- a bearing (23), located in the guide platform (22), supporting the axle (1), and
- an actuating element, attached to the movable plate (5), so as to move the movable plate (5) with respect to the support (8), parallel to the chassis (14), integrally with the cover (7) and the wheel (2), from the resting position to the working position.

In this second embodiment, the drive mechanism comprises a vibration-absorbing disk (12) positioned between the electric generator (4) and the cover (7).

In order to enable the passage of pressurised air to the drive element, the drive mechanism of either of the two embodiments comprises a solenoid valve (16).

The equipment also comprises a solid graphene or lithium battery, attached to the electric generator (4) in order to store the electricity generated by the rotation of the axle (1).

In order to convert the three-phase current generated in the electric generator (4) into direct current which is stored in the battery (15), a charger (20) is connected between both elements.

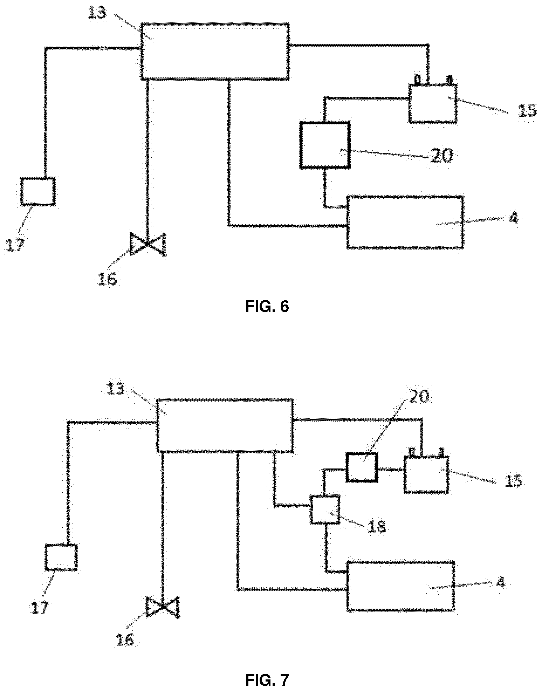

The equipment comprises a control unit (13), which is shown in figure 6, which is a fundamental part for the management and operations thereof. The control unit is at least connected to the electric generator (4), the battery (15) and the solenoid valve (16).

This control unit (13) receives signals from the different components and also sends and activates others for the movement, connection and disconnection thereof. Likewise, the control unit (13) is configured to receive data about the charge of the battery (15), about the demand for energy. Depending on the data obtained from each element of the equipment, the control unit (13) manages the activation of the drive mechanisms in order to bring the wheel (2) of the equipment into contact with the tyre (3) of the vehicle. Likewise, the control unit (13) determines whether the energy generation is being performed correctly.

The equipment can further comprise a detector (17) for the speed of the vehicle connected to the control unit (13).

In exemplary embodiments, the control unit (13) can be additionally connected to other external devices, such as for example, displays of the assembly of the equipment, or additional control devices for generating energy and for charging and discharging the batteries of the equipment.

In one embodiment of the invention, the equipment comprises at least two generator assemblies (11) and a synchronoscope (18) connected to the control unit (13), as shown in figure 7, to the battery (15) and to the electric generators (11) of the generator assemblies (11), in order to unify the currents generated by the electric generators (11) and transfer them to the battery (15).

The equipment also has an internal combustion engine able to be connected to the cooling unit of the vehicle configured to supply electrical energy to said cooling unit when the battery is discharged (15).

In the internal combustion engine which is used for possible cases of a prolonged stop of the vehicle is wherein, in an exemplary embodiment, a flywheel is used to increase the efficiency of operations of said internal combustion generator. This flywheel enables a greater driving torque to be provided to the combustion engine in order to generate sufficient autonomous energy with a gasoline motor as small as possible, balancing consumption to a minimum.

This embodiment is only used at specific times when, due to prolonged stops, an additional energy contribution is necessary. It is foreseen that with the development of more efficient polymers and materials for batteries it is not necessary to use the internal combustion generator in the equipment under any circumstances.

## Claims

1. A set of equipment for generating electric energy for vehicles equipped with a chassis (14) and tyres (3) preferably intended to power a cooling unit of the vehicle, which comprises:
- at least one generator assembly (11),
- a battery (15),
- a control unit (13) connected to the battery (15) ,
wherein the at least one generator assembly (11) comprises:
- an axle (1) and a wheel (2) arranged on one of the ends of the axle (1), wherein the wheel (2) is intended to make contact with the upper portion of one of the tyres (3) of the vehicle such that when the vehicle moves it causes a rotational movement of the wheel (2) and therefore of the axle (1);
- an electric generator (4) connected to the axle (1) which transforms the rotational energy of said axle (1) into electricity, and attached to the control unit (13) and the battery (15) in order to store the electricity generated by the rotation of the axle (1);
**characterized in that** the at least one generator assembly (11) further comprises:
- a drive mechanism, configured to move the wheel (2) between a resting position wherein it is separated from the tyre (3), and a working position wherein it is in contact with the tyre (3), such that it is kept in the working position until the electric generator (4) is at 100% charge and the wheel (2) moves back to the resting position, wherein the drive mechanism comprises:
- a support (8) intended to be linked to the chassis (14) of the vehicle,
- a movable plate (5) attached to the support,
- a cover (7) supporting the electric generator (4), and which is in contact with the movable plate (5),
- a drive element, attached to the movable plate (5), so as to move the movable plate (5) with respect to the support (8), integrally with the cover (7) and the wheel (2), from the resting position to the working position, and
- a solenoid valve (16), connected to the control unit (13), which enables the passage or exit of pressurised air to the drive element.

2. The equipment of claim 1, additionally comprising a reducer (19) positioned between the axle (1) and the wheel (2).

3. The equipment of claim 1, additionally comprising a charger (20), attached to the electric generator (4) and the battery (15) in order to transform the alternating current generated in the electric generator (4) into a direct current that is stored in the battery (15).

4. The equipment of claim 1, wherein the drive mechanism configured to move the wheel (2) additionally comprises:
- guides (21) located on the support (8), parallel to the chassis (14), whereon the movable plate (5) is positioned,
- a guide platform (22), intended to be fastened to the chassis (14),
- a bearing (23), located in the guide platform (22), supporting the axle (1),
- the actuating element, attached to the movable plate (5), so as to move the movable plate (5) with respect to the support (8), on the guides (21), parallel to the chassis (14), integrally with electric generator (4) and the wheel (2), from the resting position to the working position.

5. The equipment of claim 1, wherein the drive mechanism configured to move the wheel (2) additionally comprises:
- an articulation shaft (9) attached to the support (8) and to the movable plate (5),
- the drive element, comprising a pneumatic mattress (6) attached to the movable plate (5) and to the support (8), such that when inflated it causes the movable plate (5) to tilt with respect to the articulation shaft (9) in order to move the cover (7) integrally with the electric generator (4) and the wheel (2), from the resting position to the working position.

6. The equipment of claim 4, wherein the drive mechanism configured to move the wheel (2) additionally comprises a vibration-absorbing disk (12) positioned between the electric generator (4) and the cover (7).

7. The equipment of claim 5, wherein the drive mechanism configured to move the wheel (2) additionally comprises a vibration-absorbing disk (12) positioned between the movable plate (5) and the cover (7).

8. The equipment of any of claims 1 to 7, additionally comprising at least two generator assemblies (11) and a synchronoscope (18) connected to the control unit (13), the charger (20) and the electric generators (4) of the generator assemblies (11) in order to unify the currents generated by the electric generators (11) and transfer them to the battery (15).

9. The equipment of any of claims 1 to 7, additionally comprising a detector (17) for the speed of the vehicle connected to the control unit (13).

10. The equipment of any of claims 1 to 7, additionally comprising at least one three-phase socket for exterior charging.

## Patentansprüche

1. Gerätesatz zur Erzeugung elektrischer Energie für Fahrzeuge, die mit einem Fahrgestell (14) und Reifen (3) ausgestattet sind, die vorzugsweise dazu bestimmt sind, eine Kühleinheit des Fahrzeugs anzutreiben, umfassend:
- mindestens eine Generatorbaugruppe (11),
- eine Batterie (15),
- eine Steuereinheit (13), die mit der Batterie (15) verbunden ist,
wobei die mindestens eine Generatorbaugruppe (11) umfasst:
- eine Achse (1) und ein Rad (2), die an einem der Enden der Achse (1) angeordnet sind, wobei das Rad (2) dazu bestimmt ist, den oberen Abschnitt eines der Reifen (3) des Fahrzeugs derart zu berühren, dass es bei einer Bewegung des Fahrzeugs eine Drehbewegung des Rads (2) und damit der Achse (1) bewirkt;
- einen mit der Achse (1) verbundenen Elektrogenerator (4), der die Rotationsenergie der Achse (1) in Elektrizität umwandelt und an der Steuereinheit (13) und der Batterie (15) angebracht ist, um den Strom zu speichern, der durch die Drehung der Achse (1) erzeugt wird;
**dadurch gekennzeichnet, dass** die mindestens eine Generatorbaugruppe (11) ferner umfasst:
- einen Antriebsmechanismus, der konfiguriert ist, um das Rad (2) zwischen einer Ruheposition, in der es vom Reifen (3) getrennt ist, und einer Arbeitsposition, in der es mit dem Reifen (3) in Kontakt ist, zu bewegen, sodass es in Arbeitsposition gehalten wird, bis der Stromgenerator (4) zu 100 % geladen ist und das Rad (2) in die Ruheposition zurückkehrt, wobei der Antriebsmechanismus umfasst:
- eine Stütze (8), die dazu bestimmt ist, mit dem Fahrgestell (14) des Fahrzeugs verbunden zu werden,
- eine bewegliche Platte (5), die an der Stütze befestigt ist,
- eine Abdeckung (7), die den Elektrogenerator (4) stützt und die mit der beweglichen Platte (5) in Kontakt steht,
- ein Antriebselement, das an der beweglichen Platte (5) angebracht ist, um die bewegliche Platte (5) bezüglich der Stütze (8) einstückig mit der Abdeckung (7) und dem Rad (2) aus der Ruheposition in die Arbeitsposition zu bewegen, und
- ein mit der Steuereinheit (13) verbundenes Magnetventil (16), das den Durchtritt oder Austritt von Druckluft zum Antriebselement ermöglicht.

2. Gerät nach Anspruch 1, zusätzlich umfassend ein Untersetzungsgetriebe (19), das zwischen der Achse (1) und dem Rad (2) positioniert ist.

3. Gerät nach Anspruch 1, zusätzlich umfassend ein Ladegerät (20), das an dem Elektrogenerator (4) und der Batterie (15) angebracht ist, um den im Elektrogenerator (4) erzeugten Wechselstrom in einen Gleichstrom umzuwandeln, der in der Batterie (15) gespeichert wird.

4. Gerät nach Anspruch 1, wobei der Antriebsmechanismus, der konfiguriert ist, um das Rad (2) zu bewegen, zusätzlich umfasst:
- Führungen (21), die sich auf der Stütze (8) parallel zum Fahrgestell (14) befinden, auf denen die bewegliche Platte (5) positioniert ist,
- eine Führungsplattform (22), die dazu bestimmt ist, am Fahrgestell (14) befestigt zu werden,
- ein Lager (23), das sich in der Führungsplattform (22) befindet und die Achse (1) stützt,
- das Betätigungselement, das an der beweglichen Platte (5) angebracht ist, um die bewegliche Platte (5) bezüglich der Stütze (8) auf den Führungen (21) parallel zum Fahrgestell (14), einstückig mit dem Elektrogenerator (4) und dem Rad (2) aus der Ruheposition in die Arbeitsposition zu bewegen.

5. Gerät nach Anspruch 1, wobei der Antriebsmechanismus, der konfiguriert ist, um das Rad (2) zu bewegen, zusätzlich umfasst:
- eine Gelenkwelle (9), die an der Stütze (8) und an der beweglichen Platte (5) angebracht ist,
- das Antriebselement, das eine pneumatische Matratze (6) umfasst, die an der beweglichen Platte (5) und an der Stütze (8) angebracht ist, so dass es beim Aufblasen eine Kippung der beweglichen Platte (5) in Bezug auf die Gelenkwelle (9) bewirkt, um die Abdeckung (7) einstückig mit dem Elektrogenerator (4) und dem Rad (2) aus der Ruheposition in die Arbeitsposition zu bewegen.

6. Gerät nach Anspruch 4, wobei der Antriebsmechanismus, der konfiguriert ist, um das Rad (2) zu bewegen, zusätzlich eine schwingungsdämpfende Scheibe (12) umfasst, die zwischen dem Elektrogenerator (4) und der Abdeckung (7) positioniert ist.

7. Gerät nach Anspruch 5, wobei der Antriebsmechanismus, der konfiguriert ist, um das Rad (2) zu bewegen, zusätzlich eine schwingungsdämpfende Scheibe (12) umfasst, die zwischen der beweglichen Platte (5) und der Abdeckung (7) positioniert ist.

8. Gerät nach einem der Ansprüche 1 bis 7, zusätzlich umfassend mindestens zwei Generatorbaugruppen (11) und ein Synchronoskop (18), das mit der Steuereinheit (13), dem Ladegerät (20) und den Elektrogeneratoren (4) der Generatorbaugruppen (11) verbunden ist, um die Ströme zu vereinen, die von den Elektrogeneratoren (11) erzeugt werden, und sie an die Batterie (15) zu übertragen.

9. Gerät nach einem der Ansprüche 1 bis 7, zusätzlich umfassend einen Detektor (17) für die Geschwindigkeit des Fahrzeugs, der mit der Steuereinheit (13) verbunden ist.

10. Gerät nach einem der Ansprüche 1 bis 7, zusätzlich umfassend mindestens eine Drehstromsteckdose zum externen Laden.

## Revendications

1. Jeu d'équipement de génération d'énergie électrique pour des véhicules équipés d'un châssis (14) et de pneumatiques (3) destiné de préférence à alimenter un groupe frigorifique du véhicule, qui comprend :
- au moins un ensemble de générateur (11),
- une batterie (15),
- une unité de commande (13) connectée à la batterie (15),
dans lequel l'au moins un ensemble de générateur (11) comprend :
- un essieu (1) et une roue (2) agencée sur l'une des extrémités de l'essieu (1), dans lequel la roue (2) est destinée à entrer en contact avec la partie supérieure de l'un des pneumatiques (3) du véhicule de telle sorte que lorsque le véhicule se déplace elle provoque un mouvement de rotation de la roue (2) et donc de l'essieu (1) ;
- un générateur électrique (4) connecté à l'essieu (1) qui transforme l'énergie de rotation dudit essieu (1) en électricité, et fixé à l'unité de commande (13) et à la batterie (15) afin de stocker l'électricité générée par la rotation de l'essieu (1) ;
**caractérisé en ce que** l'au moins un ensemble de générateur (11) comprend en outre :
- un mécanisme d'entraînement, configuré pour déplacer la roue (2) entre une position de repos dans laquelle elle est séparée du pneumatique (3), et une position de travail dans laquelle elle est en contact avec le pneumatique (3), de telle sorte qu'elle est maintenue en position de travail jusqu'à ce que le générateur électrique (4) soit chargé à 100 % et que la roue (2) revienne en position de repos, dans lequel le mécanisme d'entraînement comprend :
- un support (8) destiné à être lié au châssis (14) du véhicule,
- une plaque mobile (5) fixée au support,
- un couvercle (7) supportant le générateur électrique (4), et qui est en contact avec la plaque mobile (5),
- un élément d'entraînement, fixé à la plaque mobile (5), de manière à déplacer la plaque mobile (5) par rapport au support (8), de manière solidaire avec le couvercle (7) et la roue (2), de la position de repos à la position de travail, et
- une électrovanne (16), connectée à l'unité de commande (13), qui permet le passage ou la sortie d'air sous pression vers l'élément d'entraînement.

2. Équipement selon la revendication 1, comprenant en outre un réducteur (19) positionné entre l'essieu (1) et la roue (2).

3. Équipement selon la revendication 1, comprenant en outre un chargeur (20), fixé au générateur électrique (4) et à la batterie (15) afin de transformer le courant alternatif généré dans le générateur électrique (4) en un courant continu qui est stocké dans la batterie (15).

4. Équipement selon la revendication 1, dans lequel le mécanisme d'entraînement configuré pour déplacer la roue (2) comprend en outre :
- des guides (21) situés sur le support (8), parallèles au châssis (14), sur lesquels est positionnée la plaque mobile (5),
- une plate-forme de guidage (22), destinée à être reliée au châssis (14),
- un palier (23), situé dans la plate-forme de guidage (22), supportant l'essieu (1),
- l'élément d'actionnement, fixé à la plaque mobile (5), de manière à déplacer la plaque mobile (5) par rapport au support (8), sur les guides (21), parallèles au châssis (14), de manière solidaire avec le générateur électrique (4) et la roue (2), de la position de repos à la position de travail.

5. Équipement selon la revendication 1, dans lequel le mécanisme d'entraînement configuré pour déplacer la roue (2) comprend en outre :
- un arbre d'articulation (9) fixé au support (8) et à la plaque mobile (5),
- l'élément d'entraînement, comprenant un matelas pneumatique (6) fixé à la plaque mobile (5) et au support (8), de telle sorte que lorsqu'il est gonflé il provoque le basculement de la plaque mobile (5) par rapport à l'arbre d'articulation (9) afin de déplacer le couvercle (7) de manière solidaire avec le générateur électrique (4) et la roue (2), de la position de repos à la position de travail.

6. Équipement selon la revendication 4, dans lequel le mécanisme d'entraînement configuré pour déplacer la roue (2) comprend en outre un disque d'absorption des vibrations (12) positionné entre le générateur électrique (4) et le couvercle (7).

7. Équipement selon la revendication 5, dans lequel le mécanisme d'entraînement configuré pour déplacer la roue (2) comprend en outre un disque d'absorption des vibrations (12) positionné entre la plaque mobile (5) et le couvercle (7).

8. Équipement selon l'une quelconque des revendications 1 à 7, comprenant en outre au moins deux ensembles de générateurs (11) et un synchronoscope (18) connecté à l'unité de commande (13), au chargeur (20) et aux générateurs électriques (4) des ensembles de générateurs (11) afin d'unifier les courants générés par les générateurs électriques (11) et de les transférer à la batterie (15).

9. Équipement selon l'une quelconque des revendications 1 à 7, comprenant en outre un détecteur (17) de la vitesse du véhicule connecté à l'unité de commande (13).

10. Équipement selon l'une quelconque des revendications 1 à 7, comprenant en outre au moins une prise triphasée pour la recharge extérieure.
